# EUROPEAN PATENT APPLICATION

(11) **EP 3 528 245 A1**
(43) Date of publication of application: **21.08.2019**
(21) Application number: 18205507.9
(22) Date of filing: 09.11.2018
(51) Int. Cl.: G10L 17/04, G10L 17/22

(54) **USER IDENTIFICATION METHOD AND APPARATUS BASED ON ACOUSTIC FEATURES**

(30) Priority: 10.11.2017 CN 201711106112
(71) Applicant: Beijing Xiaomi Mobile Software Co., Ltd., Beijing 100085 (CN)
(72) Inventor: CHENG, Liang, Beijing, 100085 (CN); XIA, Yongfeng, Beijing, 100085 (CN); FAN, Jialin, Beijing, 100085 (CN)
(74) Representative: Hughes, Andrea Michelle

(57) **Abstract**

A user identification method includes extracting (101) one or more acoustic features from acquired voice; acquiring (102) user information matching the one or more acoustic features; and outputting (103) the user information based upon that the user information matching the one or more acoustic features is acquired.

## Description

### BACKGROUND

Voice recognition technologies have gradually become popular in various applications. For example, voice recognition services are finding more and more use along with the increase in user demands, such as translation, authentication, text input, and the like.

In general, voice recognition technologies can be employed to recognize the voice content. For example, textual content may be recognized based on voice input by a user, and then the textual content may be translated into another language.

### SUMMARY

The present disclosure relates to sound communication technologies, and in particular, to a user identification method and apparatus based on sound characteristics.

For example, the inventors of the present disclosure have recognized that identity of a user performing the translation operation cannot be determined in conventional technologies based on the voice input by the user.

To overcome problems existing in the related art, embodiments of the present disclosure provide a user identification method and apparatus based on acoustic features, which may determine matching user information such as the user identity based on the acoustic features of the input voice.

According to a first aspect of embodiments of the present disclosure, there is provided a user identification method based on acoustic features, wherein the method includes:
extracting an acoustic feature from an acquired voice;
acquiring user information matching the acoustic feature; and
outputting the user information when the user information matching the acoustic feature is acquired.

In some embodiments, the method further includes:
determining that the acquired voice is a voice of a new user when the user information matching the acoustic feature is not acquired;
generating a prompt message for inputting user information, wherein the prompt message is used for the new user to input user information; and
storing the acoustic feature and corresponding user information in a preset file, when user information input by a user based on the prompt message is received.

In some embodiments, the storing the acoustic feature and corresponding user information in a preset file includes:
dividing the acoustic feature into a plurality of acoustic sub-features based on acoustic units; and
storing the plurality of sub-features and corresponding user information in a preset file, wherein the preset file includes user information of each user who has input his/her voice and corresponding acoustic sub-features.

In some embodiments, the method further includes:
receiving an operation command that broadcasts a piece of text content with an acoustic feature matching a user who has input his/her voice;
acquiring acoustic sub-features corresponding to the user who has input his/her voice;
determining a voice corresponding to the text content based on the acoustic sub-features corresponding to the user who has input his/her voice; and
outputting the voice.

According to a second aspect of embodiments of the present disclosure, there is provided a user identification apparatus based on acoustic features, wherein the apparatus includes:
a feature extracting portion, configured to extract an acoustic feature from an acquired voice;
an information acquiring portion, configured to acquire user information matching the acoustic feature; and
an information outputting portion, configured to output the user information when the information acquiring portion acquires the user information matching the acoustic feature.

In some embodiments, the apparatus further includes:
a determining portion, configured to determine that the acquired voice is a voice of a new user when the user information matching the acoustic feature is not acquired;
a prompting portion, configured to generate a prompt message for inputting user information, wherein the prompt message is used for the new user to input user information; and
a storage portion, configured to store the acoustic feature and corresponding user information in a preset file, when user information input by a user based on the prompt message generated by the prompting portion is received.

In some embodiments, the storage portion includes:
a dividing sub-portion, configured to divide the acoustic feature into a plurality of acoustic sub-features based on acoustic units; and
a storage sub-portion, configured to store the plurality of sub-features and corresponding user information in a preset file, wherein the preset file includes user information of each user who has input his/her voice and corresponding acoustic sub-features.

In some embodiments, the apparatus further includes:
a receiving portion, configured to receive an operation command that broadcasts a piece of text content with an acoustic feature matching a user who has input his/her voice;
an acquiring portion, configured to acquire acoustic sub-features corresponding to the user who has input his/her voice;
a voice determining portion, configured to determine a voice corresponding to the text content based on the acoustic sub-features corresponding to the user who has input his/her voice; and
a voice outputting portion, configured to output the voice.

According to a third aspect of embodiments of the present disclosure, there is provided an electronic device, including:
a processor; and
memory for storing instructions executable by the processor,
wherein the processor is configured to perform:
extracting an acoustic feature from an acquired voice;
acquiring user information matching the acoustic feature; and
outputting the user information when the user information matching the acoustic feature is acquired.

According to a fourth aspect of embodiments of the present disclosure, there is provided a non-transitory computer-readable storage medium having computer instructions stored therein, wherein, when executed by a processor, following steps are implemented:
extracting an acoustic feature from an acquired voice;
acquiring user information matching the acoustic feature; and
outputting the user information when the user information matching the acoustic feature is acquired.

At least some embodiments of the present disclosure can have one or more of the following advantages: when a voice is acquired, an acoustic feature may be extracted from the voice, and user information of the user who utters the voice may be acquired and output, such as the user's name, head portrait, and title or the like, which helps users listening to the voice to determine information about the user who provides the voice.

Moreover, when the user information matching the acquired voice is not acquired, it may be determined that the voice is from a new user, and the user is then prompted to input the user information, and the user information of the user can be stored. Therefore, it may be determined to output matched user information when the voice of the user is acquired subsequently.

Dividing the acoustic feature into a plurality of acoustic sub-features based on acoustic units and storing them in a preset file, facilitates determining the matching user information based on the acoustic sub-features when the voice of the user is subsequently extracted, and the success rate and accuracy rate of the matching are improved.

By receiving an operation command that broadcasts a piece of textual content with an acoustic feature matching a user who has input his/her voice, acquiring acoustic sub-features corresponding to the user who has input his/her voice, and based on the acoustic sub-features corresponding to the user who has input his/her voice, the voice matching the text content may be broadcasted with an acoustic feature matching the user who has input the voice.

It is to be understood that both the foregoing general description and the following detailed description are exemplary and explanatory only and are not restrictive of the present disclosure.

### BRIEF DESCRIPTION OF THE DRAWINGS

The accompanying drawings referred to in the specification are a part of this specification, and provide illustrative embodiments consistent with the disclosure and, together with the detailed description, serve to illustrate some embodiments of the disclosure.
FIG. 1 is a flowchart of a user identification method based on acoustic features according to some embodiments.
FIG. 2A is a flowchart of a user identification method based on acoustic features according to a first embodiment.
FIG. 2B is a flowchart of a step in the embodiment shown in FIG. 2A.
FIG. 3 is a flowchart of a user identification method based on acoustic features according to a second embodiment.
FIG. 4 is a block diagram of a user identification apparatus based on acoustic features according to some embodiments.
FIG. 5 is a block diagram of an apparatus for automatically recording during a call according to some other embodiments.
FIG. 6 is a block diagram of an apparatus suitable for automatic recording during a call according to some embodiments.

### DETAILED DESCRIPTION

Various embodiments of the present disclosure are described below with specific examples, and other advantages and effects of the present disclosure can be easily understood by those skilled in the field of technology from the contents disclosed in this specification. The following description refers to the accompanying drawings in which same numeral references in different drawings may represent the same or similar elements unless otherwise indicated. The described embodiments are only a part of embodiments in the present disclosure, rather than all of them. The present disclosure can also be implemented or applied through different specific embodiments, and various details of the specification can also be modified or changed based on different viewpoints and applications without departing from the scope of the present invention as defined by the claims.

Various technical solutions provided by the present disclosure can be applied to an electronic device having a voice recognition function, such as a translator, a smart phone, an iPAD, or a server that is networked with the translator, the smart phone, the iPAD or the like and provides a voice recognition function.

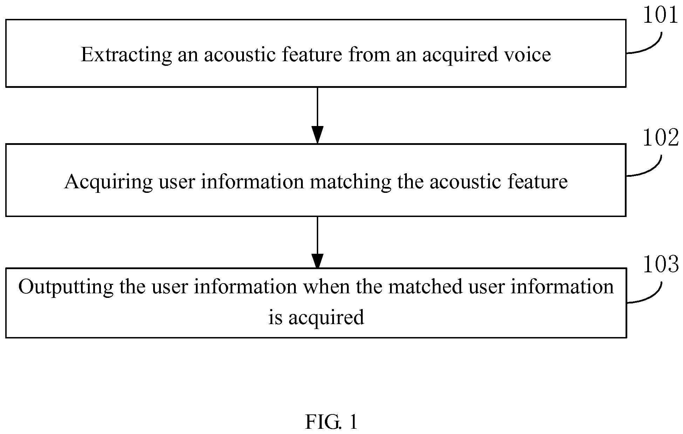

FIG. 1 is a flowchart of a user identification method based on acoustic features according to some embodiments. An automatic recording method during the call may be applied to an electronic device (such as a translator, a smart phone, an iPAD, a server, etc.). As shown in FIG. 1, the user identification method based on acoustic features includes following steps.

In step 101, an acoustic feature is extracted from an acquired voice.

Speaker recognition, also known as voiceprint recognition, is a process of determining a speaker based on the voice uttered by the speaker, which is the recognition technique that serves the voice as the identity authentication basis.

In some embodiments, the acoustic feature extraction is to perform voice information parameterization on the input voice, to convert into machine-identifiable voice feature vectors. The voice parameters may include one or more of pitch periods, Linear Predictive Coefficients (LPC), impulse response of a sound channel, self-correlation coefficients, sound channel area functions, LPCC features, MFCC features, Perceptual Linear Predictive (PLP) and difference cepstrum, which is not limited herein.

Since timbre of each person is usually not the same, the acoustic feature corresponding to the same piece of textual content will also be different. For example, a user 1 utters a "hello" voice feature vector as vector 1, and a user 2 utters a "hello" voice feature vector as vector 2, and vector 1 and vector 2 are usually different.

In step 102, user information matching the acoustic feature is acquired.

In some embodiments, the electronic device may store the user information of the user who has input the voice and the acoustic feature corresponding to the input voice in a preset file. In this way, when the electronic device acquires a new voice, the matching user information may be acquired by querying the preset file.

In some embodiments, the user information may include, but is not limited to, a user's name, a user image (e.g., a user's portrait), a user's job title (for example, the user is an office director of a publicity office, etc.).

In some embodiments, the preset file may be in a database form. In some other embodiments, the preset file may be in a list form. In yet some other embodiments, the preset file may be in a tabular form.

In some embodiments, the preset file may also be in a form of a file that can store user information and acoustic features corresponding to the input voice.

In step 103, the user information is output when the user information matching the acoustic feature is acquired.

In some embodiments, the user information may be output in a text form. In some embodiments, the user information may also be output in a voice form.

In an embodiment, the user information may be output at the same time when other information is output. For example, after the translator receives a language and translates the language into another language, the translated other language may be output at the same time with the user information. In another example, after the voice recorder receives a voice, it may convert a sound into a text and display the user information of the speaker in front of the converted text simultaneously after identifying the speaker.

Of course, the user can opt out of the identification, data collection, storage and transfer, to protect the user privacy. In some embodiments, a user identification can be generated corresponding to the user profile. The user identification can be selected to be such that it does not reveal the user's real identity, to thereby protect the user privacy.

In this embodiment, when a voice is acquired, an acoustic feature may be extracted from the voice, and user information of the user who uttered the voice may be obtained and output, such as the user's name, head portrait, job title, etc., which contributes to helping the user listening to the voice to determine information of the user who utters the voice.

In some embodiments, the user identification can be employed in voice calls. For example, the voice call can be between mobile terminals as a conventional telephone call, or can be through software or communication apps such as WhatsApp, Snapchat, Skype, WeChat, QQ, or other Internet communication or social media software. The platform for such voice calls or software to communicate among communication terminals can include, for example, a mobile phone, a computer, or a tablet computer, etc.

In some other embodiments, the user identification can be employed for security applications, such as user authentication to provide proper authorization to execute user commands, such as turning on/off devices and/or applications (apps).

The following describes some technical solutions provided by various embodiments of the present disclosure with specific implementations.

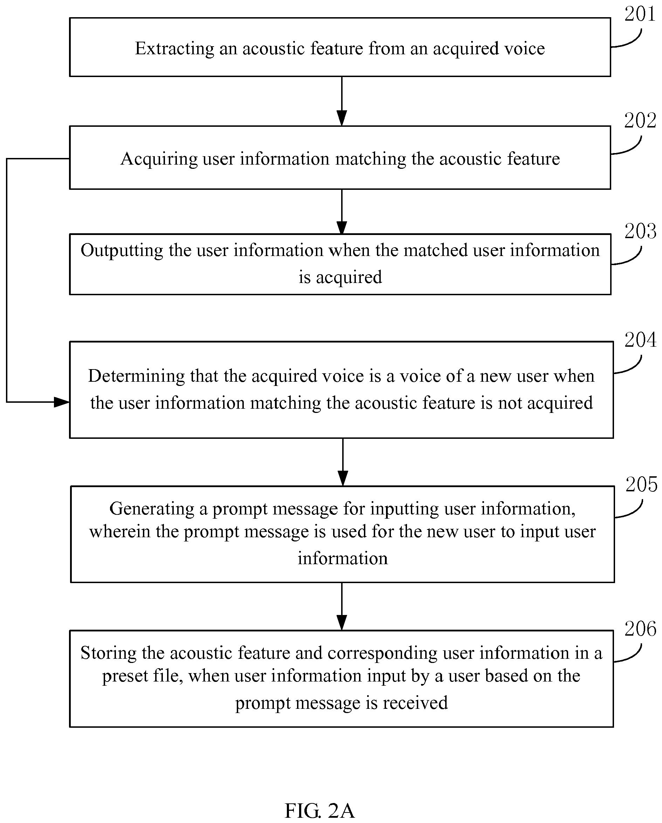

FIG. 2A is a flowchart of a user identification method based on acoustic features according to a first embodiment.

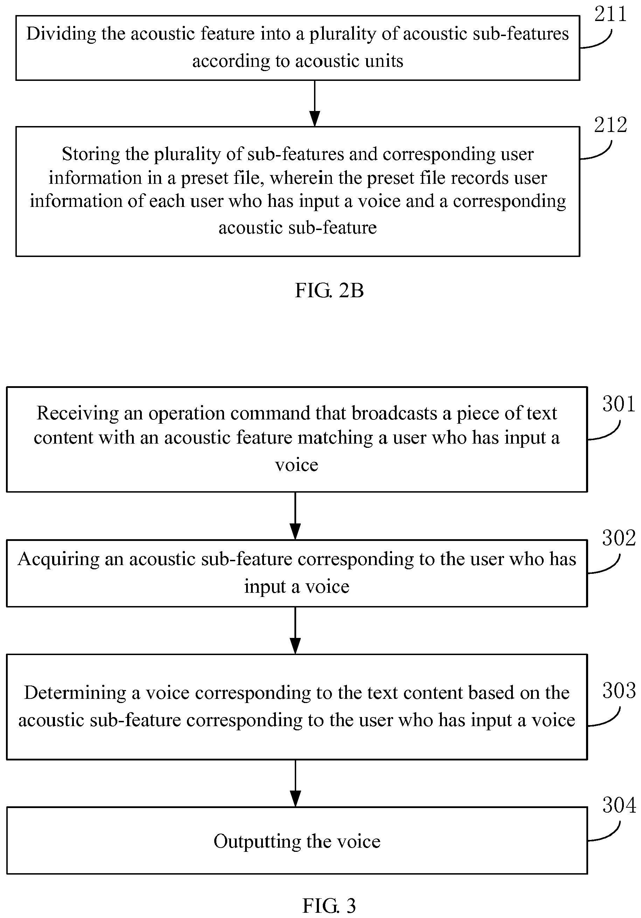

FIG. 2B is a flowchart of step 206 of the embodiment shown in FIG. 2A. The embodiment uses the above method provided by various embodiments of the present disclosure, and gives exemplary illustration by taking the example of how to generate and store the user's voice acoustic features and user information.

As shown in FIG. 2A, the method includes following steps.

In step 201, an acoustic feature is extracted from an acquired voice.

In step 202, user information matching the acoustic feature is acquired.

In step 203, the user information is output when the user information matching the acoustic feature is acquired.

In some embodiments, the description of step 201 to step 203 may refer to the embodiments shown in FIG. 1, and will not be described in detail herein.

In step 204, it is determined that the acquired voice is a voice of a new user when the user information matching the acoustic feature is not acquired.

In step 205, a prompt message for inputting user information is generated, wherein the prompt message is used for the new user to input user information.

In some embodiments, the prompt message may be a voice prompt message, for example, displaying a text message of "please input the name, head portrait or the like of the speaker." In an embodiment, the prompt message may be a text prompt message, such as playing voice of "please input the name, head portrait or the like of the speaker."

In step 206, the acoustic feature and corresponding user information are stored in a preset file, when user information input by a user based on the prompt message is received.

In some embodiments, the preset file may be in a database form. In some other embodiments, the preset file may be in a list form. In some other embodiments, the preset file may be in a tabular form.

In some embodiments, the preset file may also be in a form of a file that can store user information and acoustic features corresponding to the input voice.

As shown in FIG. 2B, the implementations of storing the acoustic features in the preset file may refer to the description of step 206, including following steps.

In step 211, the acoustic feature is divided into a plurality of acoustic sub-features based on acoustic units.

In some embodiments, the acoustic unit may be understood as a pronunciation unit. For example, a piece of voice "Hello, please answer the prospect of the real estate industry in recent years" can be divided into a plurality of sub-units: "Hello," "please," "answer," "In recent years," "the real estate," "industry," "of," "the prospect," "how," etc., according to the acoustic unit, and each sub-unit corresponds to acoustic sub-features.

In some embodiments, the method of dividing the acoustic feature according to the acoustic unit may be implemented with reference to an implementation method of segmenting the textual content.

In step 212, the plurality of sub-features and corresponding user information are stored in a preset file, wherein the preset file includes user information of each user who has input his/her voice and corresponding acoustic sub-features.

In some embodiments, each user and corresponding acoustic sub-features may be recorded in a preset file, in which the textual content corresponding to the acoustic sub-features is also recorded. After the user inputs a new voice and determines new acoustic sub-features based on the voice, the new acoustic sub-features may be updated and stored in the preset file.

At least some of these embodiments can also have one or more of the following beneficial technical effects: when the user information matching the acquired voice is not acquired, it may be determined that the voice is a voice uttered by a new user, and the user is then prompted to input the user information, and the user information of the user is stored, which may determine to output matched user information when the voice of the user is acquired subsequently.

In addition, dividing the acoustic feature into a plurality of acoustic sub-features based on acoustic units and storing them in a preset file, facilitates determining the matching user information based on the acoustic sub-features when the voice of the user is subsequently extracted, and the success rate and accuracy rate of the matching are improved.

FIG. 3 is a flowchart of a user identification method based on acoustic features according to a second embodiment. This embodiment uses the above-mentioned method provided by various embodiments of the disclosure, and provides an exemplary illustration by taking an example of how to output a piece of voice with a voice matching the user. As shown in FIG. 3, the method can include following steps.

In step 301, an operation command that broadcasts a piece of textual content with an acoustic feature matching a user who has input his/her voice is received.

In step 302, acoustic sub-features corresponding to the user who has input his/her voice is acquired.

In some embodiments, acoustic sub-features corresponding to the user who has input his/her voice may be acquired in the preset file. For example, the acoustic sub-features corresponding to the voice that the user has input include acoustics sub-features corresponding to the texts of "Hello," "excuse me," "I" , "have," "what," "can," "help," "you," "if there is," "need," "devoted," "for you," "provide" and "service."

When "Excuse me, what service can I provide for you?" output in the voice of the user is received, corresponding acoustic sub-features of "excuse me," "I," "can," "you," "provide," "for," "what," and "service" may be acquired from the preset file, are then organized into the corresponding acoustic feature of "Excuse me, what service can I provide for you?" Then, the voice to be output is determined with this acoustic feature.

In step 303, a voice corresponding to the textual content is determined based on the acoustic sub-features corresponding to the user who has input his/her voice.

In some embodiments, in step 301 to step 303, the acoustic sub-features corresponding to the user who has input the voice may be acquired in the preset file. For example, the acoustic sub-features corresponding to the voice that the user has input include acoustics sub-features corresponding to the texts of "Hello," "excuse me," "I" , "have," "what," "can," "help," "you," "if there is," "need," "devoted," "for you," "provide" and "service."

When "Excuse me, what service can I provide for you?" output in the voice of the user is received, corresponding acoustic sub-features of "excuse me," "I," "can," "you," "provide," "for," "what," and "service" may be acquired from the preset file, are then organized into the corresponding acoustic feature of "Excuse me, what service can I provide for you?" Then, the voice to be output is determined with this acoustic feature.

In step 304, the voice is output.

These embodiments can further have one or more of the following beneficial technical effects: by receiving an operation command that broadcasts a piece of textual content with an acoustic feature matching a user who has input his/her voice, acquiring acoustic sub-features corresponding to the user who has input his/her voice, and based on the acoustic sub-features corresponding to the user who has input his/her voice, the voice matching the text content may be broadcasted with an acoustic feature matching the user who has input the voice.

Corresponding to the foregoing embodiments of the user identification method based on acoustic features, the present disclosure further provides some embodiments of a user identification apparatus based on acoustic features.

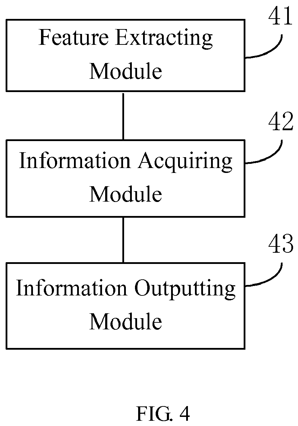

FIG. 4 is a block diagram of a user identification apparatus based on acoustic features according to some embodiments. The apparatus is applied to an electronic device. As shown in FIG. 4, the user identification apparatus based on acoustic features includes: a feature extracting portion 41, an information acquiring portion 42, and an information outputting portion 43.

The various portions may have modular configurations, or are composed of discrete components, but nonetheless may be referred to as "modules."

The feature extracting portion 41 may be configured to extract an acoustic feature from an acquired voice.

The information acquiring portion 42 may be configured to acquire user information matching the acoustic feature.

The information outputting portion 43 may be configured to output the user information when the information acquiring portion acquires the user information matching the acoustic feature.

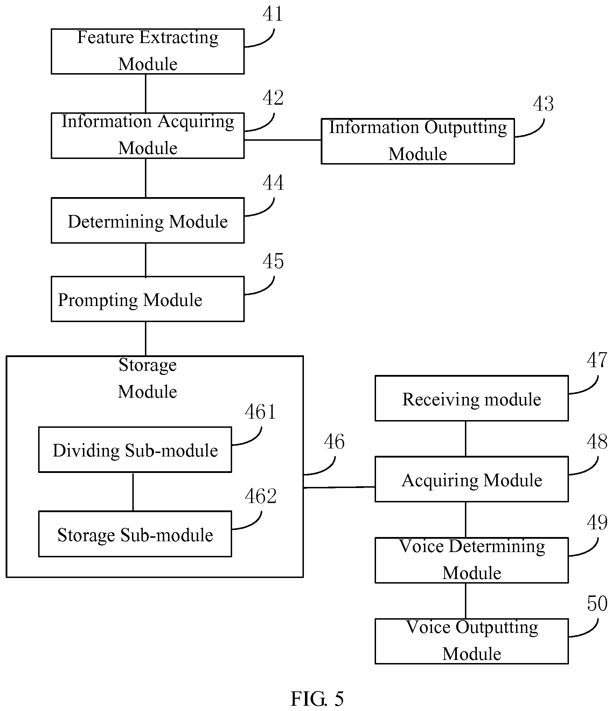

FIG. 5 is a block diagram of an apparatus for automatically recording during a call according to another embodiment. As shown in FIG. 5, based on the embodiment of FIG. 4, in an embodiment, the method further includes: a determining portion 44, a prompting portion 45 and a storage portion 46.

The determining portion 44 may be configured to determine that the acquired voice is a voice of a new user when the user information matching the acoustic feature is not acquired.

The prompting portion 45 may be configured to generate a prompt message for inputting user information, wherein the prompt message is used for the new user to input user information.

The storage portion 46 may be configured to store the acoustic feature and corresponding user information in a preset file, when user information input by a user based on the prompt message generated by the prompting portion is received.

In some embodiments, the storage portion 46 includes: a dividing sub-portion 461, and a storage sub-portion 462.

The dividing sub-portion 461 may be configured to divide the acoustic feature into a plurality of acoustic sub-features based on acoustic units.

The storage sub-portion 462 may be configured to store the plurality of sub-features and corresponding user information in a preset file, wherein the preset file includes user information of each user who has input his/her voice and corresponding acoustic sub-features.

In some embodiments, the apparatus further includes: a receiving portion 47, an acquiring portion 48, a voice determining portion 49, and a voice outputting portion 50.

The receiving portion 47 may be configured to receive an operation command that broadcasts a piece of textual content with an acoustic feature matching a user who has input his/her voice.

The acquiring portion 48 may be configured to acquire acoustic sub-features corresponding to the user who has input his/her voice.

The voice determining portion 49 may be configured to determine a voice corresponding to the textual content based on the acoustic sub-features corresponding to the user who has input his/her voice.

The voice outputting portion 50 may be configured to output the voice.

For the specific implementations of the functions and roles of each unit in the above apparatus, the implementation process of the corresponding steps in the above methods can be referred to, and details are not described herein again.

For the embodiments of the apparatuses, because they correspond to the embodiments regarding methods, they may be referred to the description of the method embodiments of the various methods. The embodiments of the apparatuses described above are merely illustrative.

The units described as separate components may be or may not be physically separate, and the components illustrated as units may be or may not be physical units, and may be at the same location, or may be distributed to multiple units over the network. A part of or the whole of the portions can be selected to achieve one or more objectives of various technical approaches of the present disclosure as desired. Those of ordinary skill in the art may understand and practice the embodiments without creative efforts.

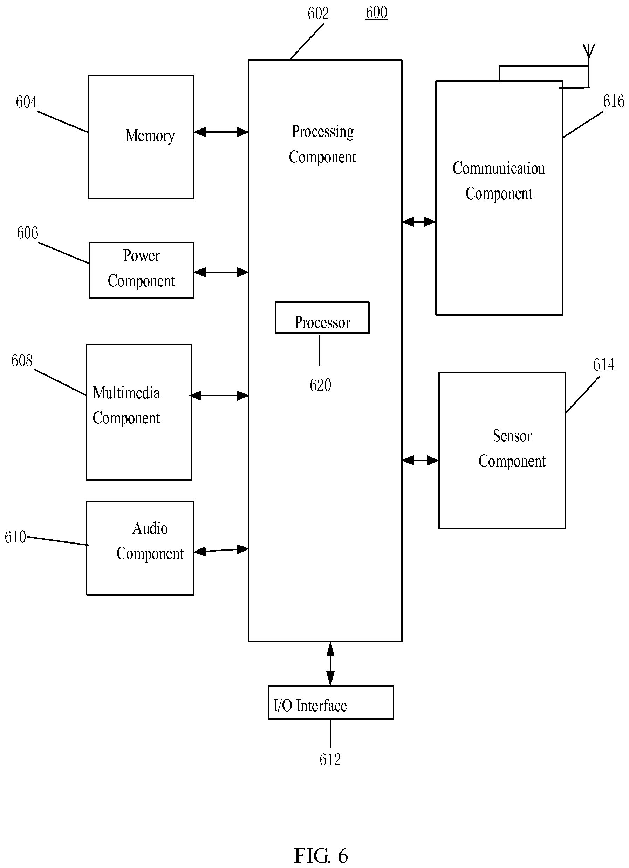

FIG. 6 is a block diagram of an apparatus suitable for automatic recording during a call according to an exemplary embodiment. The apparatus of this embodiment is applied to a user terminal.

Referring to FIG. 6, the apparatus 600 may include one or more of the following components: a processing component 602, memory 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, telephone calls, data communications, camera operations, and recording operations. The processing component 602 may include one or more processors 620 to execute instructions to perform all or part of the steps in the above described methods.

Moreover, the processing component 602 may include one or more portions which facilitate the interaction between the processing component 602 and other components. For instance, the processing component 602 may include a multimedia portion to facilitate the interaction between the multimedia component 608 and the processing component 602.

The memory 604 is configured to store various types of data to support the operations of the apparatus 600. Examples of such data include instructions for any applications or methods operated on the apparatus 600, contact data, phonebook data, messages, pictures, video, etc.

The memory 604 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 may include a power management system, one or more power sources, and any other components associated with the generation, management, and distribution of power in the apparatus 600.

The multimedia component 608 includes a screen providing an output interface between the apparatus 600 and the user. In some embodiments, the screen may include a liquid crystal display (LCD) and a touch panel (TP).

To provide for interaction with a user, implementations of the subject matter described in this specification can be implemented with a computer and/or a display device not limited to the LCD display. Other devices can be employed, such as a virtual reality (VR)/augmented reality (AR) device, a head-mount display (HMD) device, a head-up display (HUD) device, smart eyewear (e.g., glasses), a CRT (cathode-ray tube), light-emitting diode (LED) display, an organic LED (OLED) display, a micro LED (µLED) display, a quantum-dot LED (QLED) display, TFT (thin-film transistor), plasma, other flexible configuration, or any other monitor for displaying information to the user and a keyboard, a pointing device, e.g., a mouse, trackball, etc., or a touch screen, touch pad, etc., by which the user can provide input to the computer.

If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action.

In some embodiments, the multimedia component 608 includes a front camera and/or a rear camera. The front camera and the rear camera may receive an external multimedia datum while the apparatus 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the apparatus 600 is in an operation mode, such as a call mode, a recording mode, and a sound recognition mode. The received audio signal may be further stored in the memory 604 or sent via the communication component 616. In embodiments, the audio component 610 further includes a speaker to output audio signals.

The I/O interface 612 provides an interface between the processing component 602 and peripheral interface portions, such as a keyboard, a click wheel, buttons, and the like. The buttons may include, but are not limited to, a home button, a volume button, a starting button, and a locking button.

The sensor component 614 includes one or more sensors to provide state assessments of various aspects of the apparatus 600. For instance, the sensor component 614 may detect an open/closed state of the apparatus 600, relative positioning of components, e.g., the display and the keypad, of the apparatus 600, a change in position of the apparatus 600 or a component of the apparatus 600, a presence or absence of user contact with the apparatus 600, an orientation or an acceleration/deceleration of the apparatus 600, and a change in temperature of the apparatus 600.

The sensor component 614 may include a proximity sensor configured to detect the presence of nearby objects without any physical contact. The sensor component 614 may further include a light sensor, such as a CMOS or CCD image sensor, for use in imaging applications. In embodiments, the sensor component 614 may further include an accelerometer sensor, a gyroscope sensor, a magnetic sensor, a pressure sensor or a temperature sensor.

The communication component 616 is configured to facilitate communication, wired or wirelessly, between the apparatus 600 and other devices. The apparatus 600 may access a wireless network based on a communication standard, such as WiFi, 2G, or 3G, or a combination thereof.

In some embodiments, the communication component 616 receives a broadcast signal or broadcast associated information from an external broadcast management system via a broadcast channel.

In some embodiments, the communication component 616 further includes a near field communication (NFC) portion to facilitate short-range communications. For example, the NFC portion may be implemented based on a radio frequency identification (RFID) technology, an infrared data association (IrDA) technology, an ultra-wideband (UWB) technology, a Bluetooth (BT) technology, and other technologies.

In some embodiments, the apparatus 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method.

In some embodiments, there is further provided a non-transitory computer-readable storage medium including instructions, such as included in the memory 604, executable by the processor 620 in the apparatus 600, for performing the above-described methods. For example, the non-transitory computer-readable storage medium may be a ROM, a RAM, a CD-ROM, a magnetic tape, a floppy disc, an optical data storage device, and the like.

When instructions in the storage medium are executed by a processor of a user terminal, the user terminal is enabled to perform a user identification method based on acoustic features, wherein the method includes: extracting an acoustic feature from an acquired voice; acquiring user information matching the acoustic feature; and outputting the user information when the user information matching the acoustic feature is acquired.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more modules of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, or other storage devices). Accordingly, the computer storage medium may be tangible.

The operations described in this disclosure can be implemented as operations performed by a data processing apparatus on data stored on one or more computer-readable storage devices or received from other sources.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The features disclosed herein may be implemented as part of a smart home design, which may implement individually or integrally various electronic devices in a home or office. For example, control or display functions described above may be realized on a smart television (or connected television, hybrid television, etc.) implementing the voice recognition technologies disclosed herein. The user identification methods can be employed to identify the user through voice recognition, for example, to have proper authorization to turn on or off various devices in the smart home. In some embodiments, the smart television can also be used as a communication tool similar to a portable device as described above.

In some embodiments, the smart television can include a processing circuit configured to integrate Internet connectivity with more traditional television programming sources (e.g., received via cable, satellite, over-the-air, or other signals). The smart television may be physically incorporated into a television set or may include a separate device such as a set-top box, Blu-ray or other digital media player, game console, hotel television system, and other companion devices. A smart television may be configured to allow viewers to search and find videos, movies, photos and other content on the web, on a local cable TV channel, on a satellite TV channel, or stored on a local hard drive.

Processors suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing may be utilized.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

Various modifications of, and equivalent acts corresponding to, the disclosed aspects of the example embodiments, in addition to those described above, can be made by a person of ordinary skill in the art, having the benefit of the present disclosure, without departing from the scope of the invention defined in the following claims.

## Claims

1. A user identification method, comprising:
extracting (101) one or more acoustic features from acquired voice;
acquiring (102) user information matching the one or more acoustic features; and
outputting (103) the user information based upon that the user information matching the one or more acoustic features is acquired.

2. The method according to claim 1, further comprising:
determining (204) that the acquired voice is a voice of a new user based upon that the user information matching the acoustic feature is not acquired;
generating (205) a prompt message for inputting user information, wherein the prompt message is used for the new user to input user information; and
storing (206) the one or more acoustic features and corresponding user information in a preset file, when the user information input by the new user based on the prompt message is received.

3. The method according to claim 2, wherein the storing the one or more acoustic features and corresponding user information in a preset file comprises:
dividing (211) the one or more acoustic features into a plurality of acoustic sub-features based on acoustic units; and
storing (212) the plurality of sub-features and corresponding user information in the preset file, wherein the preset file includes user information of each user who has input his/her voice and corresponding acoustic sub-features.

4. The method according to claim 3, further comprising:
receiving (301) an operation command that broadcasts a piece of textual content with an acoustic feature matching a user who has input his/her voice;
acquiring (302) acoustic sub-features corresponding to the user who has input his/her voice;
determining (303) a voice corresponding to the text content based on the acoustic sub-features corresponding to the user who has input his/her voice; and
outputting (304) the voice.

5. A user identification apparatus, comprising:
a feature extracting portion (41), configured to extract one or more acoustic features from acquired voice;
an information acquiring portion (42), configured to acquire user information matching the acoustic feature; and
an information outputting portion (43), configured to output the user information based upon that the information acquiring portion acquires the user information matching the acoustic feature.

6. The apparatus according to claim 5, wherein the apparatus further comprises:
a determining portion (44), configured to determine that the acquired voice is a voice of a new user when the user information matching the acoustic feature is not acquired;
a prompting portion (45), configured to generate a prompt message for inputting user information, wherein the prompt message is used for the new user to input user information; and
a storage portion (46), configured to store the one or more acoustic features and corresponding user information in a preset file, when the user information input by the new user based on the prompt message generated by the prompting portion is received.

7. The apparatus according to claim 6, wherein the storage portion comprises:
a dividing sub-portion (461), configured to divide the acoustic feature into a plurality of acoustic sub-features based on acoustic units; and
a storage sub-portion (462), configured to store the plurality of sub-features and corresponding user information in a preset file, wherein the preset file includes user information of each user who has input his/her voice and corresponding acoustic sub-features.

8. The apparatus according to claim 7, wherein the apparatus further comprises:
a receiving portion (47), configured to receive an operation command that broadcasts a piece of text content with an acoustic feature matching a user who has input his/her voice;
an acquiring portion (48), configured to acquire acoustic sub-features corresponding to the user who has input his/her voice;
a voice determining portion (49), configured to determine a voice corresponding to the text content based on the acoustic sub-features corresponding to the user who has input his/her voice; and
a voice outputting portion (50), configured to output the voice.

9. An apparatus (600), comprising:
a processing circuit (602); and
memory (604) configured to store instructions executable by the processing circuit,
wherein the processing circuit (602) is configured to:
extract one or more acoustic features from acquired voice;
acquire user information matching the one or more acoustic features; and
output the user information based upon that the user information matching the one or more acoustic features is acquired.

10. The apparatus (600) of claim 9, wherein the processing circuit is further configured to:
parameterize the acquired voice into a plurality of voice parameters; and
convert the parameterized voice into machine-identifiable voice feature vectors.

11. The apparatus (600) of claim 10, wherein the voice parameters comprise one or more of pitch periods, Linear Predictive Coefficients (LPC), impulse response of a sound channel, self-correlation coefficients, sound channel area functions, LPCC features, MFCC features, Perceptual Linear Predictive (PLP), or difference cepstrum.

12. The apparatus (600) of claim 11, wherein the processing circuit is further configured to identify the user in a voice call through the apparatus.

13. The apparatus (600) of claim 12, wherein the voice call is through one or more communication applications.

14. The apparatus of claim 11, wherein the processing circuit is further configured to identify the user for security applications.

15. The apparatus of claim 14, wherein the security applications comprise user authentication to provide proper authorization to execute user commands.
